# EUROPEAN PATENT SPECIFICATION

(11) **EP 4 185 482 B1**
(45) Date of publication and mention of the grant of the patent: **17.12.2025**
(21) Application number: 21749169.5
(22) Date of filing: 23.07.2021
(51) Int. Cl.: B60K 6/26, B60K 6/387, B60K 6/448, B60W 30/18, B60K 17/356, B60K 6/52, B60K 6/547, B60W 50/08, B60W 10/02, B60W 10/06, B60W 10/08, B60W 20/00, B60K 6/485, B60W 50/00

(54) **SELECTABLE VEHICLE CREEP**
WÄHLBARE FAHRZEUGKRIECHUNG
FLUAGE DE VÉHICULE SÉLECTIONNABLE

(30) Priority: 24.07.2020 GB 202011526
(43) Date of publication of application: 31.05.2023
(73) Proprietor: Jaguar Land Rover Limited, Coventry, Warwickshire CV3 4LF (GB)
(72) Inventor: HARRISON, Alex, Coventry Warwickshire CV3 4LF (GB); JONES, Gareth, Coventry Warwickshire CV3 4LF (GB); HANCOCK, Matthew, Coventry Warwickshire CV3 4LF (GB); SULLIVAN, Matt, Coventry Warwickshire CV3 4LF (GB); ROQUES, Olivier, Coventry Warwickshire CV3 4LF (GB)
(74) Representative: Jaguar Land Rover Patents Department
(86) International application number: PCT/EP2021/070740
(87) International publication number: WO 2022/018284

(56) References cited:
- DE-A1- 102009 001 291
- DE-A1- 102015 226 130
- US-A1- 2015 224 976
- US-A1- 2018 099 673

## Description

### TECHNICAL FIELD

The present disclosure relates to selectable vehicle creep. In particular, but not exclusively it relates to selectable vehicle creep in a vehicle comprising an internal combustion engine and optionally at least one electric machine.

### BACKGROUND

Vehicle creep refers to the vehicle behaviour of automatically moving from a standstill, when the brake pedal is released with a gear selected. Automatic movement refers to movement without any driver demand.

Vehicle creep traditionally occurs in vehicles comprising an engine and a torque converter automatic transmission. This is because the torque converter of the automatic transmission provides a slipping fluid coupling between the engine and the vehicle wheels. Torque from the idling engine is multiplied by the torque converter and reaches the vehicle wheels. The torque is generally sufficient to propel the vehicle. The torque reduces as the vehicle speed increases until there is no net force in the vehicle overcoming resistance to motion. Generally, vehicles can reach a creep speed of 3-6kph on level ground.

Vehicle creep can be convenient. Vehicle creep enables hill holding, and control of low-speed manoeuvres using only the brake pedal.

Vehicle creep does not occur naturally in other powertrain configurations that lack a torque converter. In such scenarios, the driver controls low-speed manoeuvres using the accelerator pedal, and a clutch pedal in the case of manual transmissions. The driver typically must adapt their driving style to the inherent powertrain configuration of the vehicle.

DE102015226130A1 relates to a method for controlling creep operation of a motor vehicle. US2015/224976A1 relates to cancelling or otherwise preventing the application of creep torque in a hybrid vehicle. US2018/099673A1 relates to strategies for providing creep torque and electric drive traffic crawl in a manual transmission vehicle.

### SUMMARY OF THE INVENTION

It is an aim of the present invention to address one or more of the disadvantages associated with the prior art.

According to an aspect of the invention there is provided a control system according to claim 1. Also disclosed herein is a control system for enabling deactivation of vehicle creep in a vehicle with an engine, the control system comprising one or more controllers, wherein the control system is configured to: enable vehicle creep so that wheel drive torque can reach a first value greater than zero without a driver load request and without a brake request, wherein enabling vehicle creep comprises the engine being active while connected to a vehicle wheel; monitor for a vehicle creep deactivation signal; and in response to the vehicle creep deactivation signal, inhibit vehicle creep so that wheel drive torque cannot reach the first value without a driver load request, and wherein inhibiting vehicle creep comprises causing disconnection of the engine, at least in part, from the vehicle wheel.

The engine may remain active while disconnected.

The vehicle comprises an electric machine configured to remain connected to at least one vehicle wheel while the engine is disconnected.

The control system may be configured to control the electric machine based on a driver load request, while the engine is disconnected.

The control system may be configured to control the engine and a generator to generate electrical energy for the electric machine, while the engine is disconnected.

The vehicle may have a plurality of powertrain operating modes including a parallel hybrid electric vehicle mode, wherein in the parallel hybrid electric vehicle mode: enabling vehicle creep comprises the engine being connected to the vehicle wheel to enable vehicle creep, and wherein the control system is configured to request additional drive torque from the electric machine to assist vehicle creep; and inhibiting vehicle creep comprises disconnecting the engine, and not requesting drive torque from the electric machine without a driver load request.

The vehicle may have a plurality of powertrain operating modes including a series hybrid electric vehicle mode and/or an electric vehicle mode, wherein in the series hybrid electric vehicle mode and/or the electric vehicle mode: enabling vehicle creep comprises the engine not being connected to the vehicle wheel, and wherein the control system is configured to request drive torque from the electric machine without a driver load request and without a brake request, to enable vehicle creep; and inhibiting vehicle creep comprises not requesting drive torque from the electric machine without a driver load request, while the engine remains disconnected.

The vehicle may have a plurality of powertrain operating modes including an engine only mode, wherein in the engine only mode, drive torque is not requested from the electric machine regardless of whether vehicle creep is enabled or inhibited.

The control system may be configured to partially reconnect the engine and slip the connection based on a driver load request, while the vehicle creep is inhibited.

When vehicle creep is inhibited, the control system may be configured to disconnect the engine in dependence on a threshold associated with falling vehicle speed, and/or wherein when vehicle creep is inhibited, the control system may be configured to reconnect the engine in dependence on a threshold associated with rising vehicle speed.

The control system may be configured to reconnect the engine in dependence on a threshold associated with a rising load request.

Prior to the disconnection, if the engine is active or is required to be active, the disconnection may be performed when a condition is satisfied.

Satisfaction of the condition may be dependent on vehicle speed.

Disconnecting the engine may comprise shifting a transmission into neutral.

Monitoring for the vehicle creep deactivation signal may comprise monitoring a human-machine interface.

The human-machine interface may comprise a digit-operated control, or wherein the vehicle creep deactivation signal is provided based on a pattern of actuations of a foot-operated control.

Deactivation of vehicle creep via the human-machine interface may require the vehicle to be secured in a stationary condition.

The control system may be configured to provide driver feedback that vehicle creep has been inhibited, after receiving the vehicle creep deactivation signal.

The control system may be configured to monitor for a vehicle creep activation signal, for enabling vehicle creep, comprising monitoring a human-machine interface.

The driver load request may comprise a torque request and/or a speed request.

The vehicle may comprise a torque converter automatic transmission.

Also disclosed herein is a control system for enabling deactivation of vehicle creep in a vehicle with an engine and an electric machine, the control system comprising one or more controllers, wherein the control system is configured to: enable vehicle creep comprising requesting drive torque from the electric machine so that wheel drive torque can reach a first value greater than zero without a driver load request and without a brake request; monitor for a vehicle creep deactivation signal; and in response to the vehicle creep deactivation signal, inhibit vehicle creep comprising not requesting the drive torque from the electric machine so that wheel drive torque cannot reach the first value without a driver load request.

According to an aspect of the invention there is provided a vehicle comprising the control system.

According to an aspect of the invention there is provided a method of enabling deactivation of vehicle creep in a vehicle with an engine, the method comprising: enabling vehicle creep so that wheel drive torque can reach a first value greater than zero without a driver load request and without a brake request, wherein enabling vehicle creep comprises the engine being active while connected to a vehicle wheel; monitoring for a vehicle creep deactivation signal; and in response to the vehicle creep deactivation signal, inhibiting vehicle creep so that wheel drive torque cannot reach the first value without a driver load request, and wherein inhibiting vehicle creep comprises causing disconnection of the engine, at least in part, from the vehicle wheel.

According to an aspect of the invention there is provided computer software that, when executed, is configured to perform any one or more of the methods.

### BRIEF DESCRIPTION OF THE DRAWINGS

One or more embodiments of the invention will now be described, by way of example only, with reference to the accompanying drawings, in which:
Fig 1 illustrates an example of a vehicle;
Fig 2 illustrates an example of a system;
Figs 3A, 3B illustrate an example of a control system and of a non-transitory computer-readable storage medium;
Fig 4 illustrates an example of a method; and
Fig 5 illustrates an example of how vehicle speed is controlled at different vehicle speeds.

### DETAILED DESCRIPTION

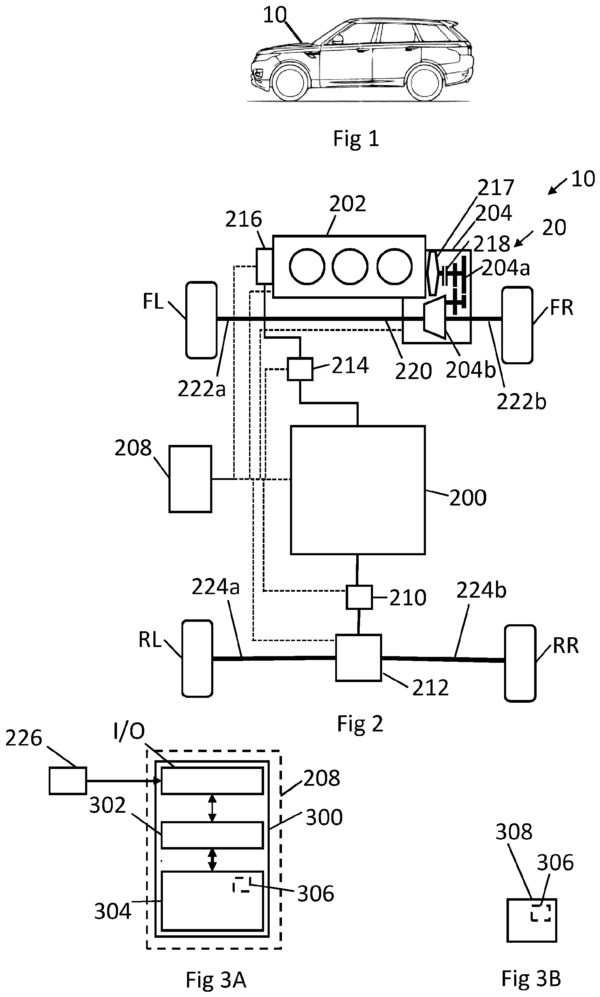

Fig 1 illustrates an example of a vehicle 10 in which embodiments of the invention can be implemented. In some, but not necessarily all examples, the vehicle 10 is a passenger vehicle, also referred to as a passenger car or as an automobile. In other examples, embodiments of the invention can be implemented for other applications, such as commercial vehicles.

In some, but not necessarily all examples, the vehicle 10 is a hybrid electric vehicle (HEV). The vehicle 10 may be configured to operate as a parallel HEV. Parallel HEVs comprise a torque path between the engine and at least one vehicle wheel, as well as a torque path between an electric machine and at least one vehicle wheel. The torque path(s) may be disconnectable by a torque path connector such as a clutch or transmission. Typically, parallel HEVs differ from series HEVs, because in series HEVs the purpose of the engine is to generate electrical energy and there is no torque path between the engine and vehicle wheels. However, some types of parallel HEVs may be configurable to operate as a series HEV, such as 'through-the-road' hybrids. In this case we may usefully describe such a hybrid vehicle as operating in a parallel hybrid electric vehicle mode (parallel HEV mode) or in a series hybrid electric vehicle mode (series HEV mode), depending on whether torque is being delivered from the engine directly to the vehicle wheels.

Fig 2 illustrates an example system 20 for an HEV 10. The system 20 defines, at least in part, a powertrain of the HEV.

The system 20 comprises a control system 208. The control system 208 comprises one or more controllers. The control system 208 may comprise one or more of: a hybrid powertrain control module; an engine control unit; a transmission control unit; a traction battery management system; and/or the like.

The illustrated system 20 comprises an engine 202. The engine 202 is an internal combustion engine. The illustrated engine 202 comprises three combustion chambers, however a different number of combustion chambers may be provided in other examples.

The system 20 comprises a transmission 204 for receiving output torque from the engine 202. In some, but not necessarily all examples, the transmission 204 comprises an automatic vehicle transmission. The transmission 204 may comprise one or more torque path connectors 218, a torque converter 217, and a gear train 204a. The gear train 204a is configured to provide a selected gear reduction in accordance with a selected gear of the vehicle 10. The gear train 204a may comprise five or more different selectable gear reductions. The gear train 204a may comprise at least one reverse gear and neutral.

The system 20 may comprise a final drive 204b which may comprise a differential which is a second gear train for receiving output torque from the gear train 204a. The final drive 204b may be integrated into the transmission 204 as a transaxle, or provided separately.

The engine 202 is configured to burn fuel to generate positive torque, and is mechanically connected (coupled) or connectable (couplable) to provide the positive torque to a first set of vehicle wheels (FL, FR) via a torque path 220. The torque path 220 extends from an output of the engine 202 to the transmission 204, then and then to first set of vehicle wheels (FL, FR) via a first axle or axles 222a, 222b. The term 'wheel drive torque' herein refers to the engine-generated torque measured at the vehicle wheels, for driving the vehicle. A positive nonzero wheel drive torque will accelerate the vehicle if its magnitude is sufficient to overcome resistance to vehicle motion. Negative torque can occur in a vehicle overrun and/or friction braking situation.

The illustrated first set of vehicle wheels (FL, FR) comprises front wheels, and the axles 222a, 222b are front transverse axles. Therefore, the system 20 is configured for front wheel drive by the engine 202. In another example, the first set of vehicle wheels comprises rear wheels (RL, RR). The illustrated first set of vehicle wheels (FL, FR) is a pair of vehicle wheels, however a different number of vehicle wheels and axles could be provided in other examples.

In the illustrated system 20, no longitudinal (centre) driveshaft is provided, which advantageously makes room for hybrid vehicle components. Therefore, the engine 202 is not connectable to a second set of rear wheels (rear wheels RL, RR in the illustration). The engine 202 may be transverse mounted to save space. In an alternative example, the engine 202 may be configured to drive the front and rear wheels. In this alternative example, the engine 202 can be disconnected while an electric machine is able to drive one or more wheels.

A torque path connector 218 may be provided inside and/or outside a bell housing of the transmission 204. The torque path connector 218 is configured to connect and configured to disconnect the torque path 220 between the engine 202 and the first set of vehicle wheels (FL, FR). The torque path connector 218 may be a part of the torque converter 217 or gear train 204a, or may be a separate clutch, such as a friction clutch. An automatic transmission may have a plurality of torque path connectors, such as 4 or 5 clutches to provide 9 gears. The vehicle may lack a clutch pedal and associated manual clutch.

The system 20 comprises an optional first electric machine 216. The first electric machine 216 may be an alternating current induction motor or a permanent magnet motor, or another type of motor. The first electric machine 216 is located so that when the torque path 220 is disconnected from the first set of vehicle wheels (FL, FR), the first electric machine 216 is also disconnected. Alternatively, the first electric machine 216 may be located so that it remains connected to the first set of vehicle wheels (FL, FR).

The first electric machine 216 may be mechanically connected (coupled) or connectable (couplable) to the engine 202 via a belt or chain. For example, the first electric machine 216 may be a belt integrated starter generator (BISG). The first electric machine 216 and the engine 202 together form a torque source for the first set of vehicle wheels (FL, FR). In the illustration, the first electric machine 216 is located at an accessory drive end of the engine 202, opposite a vehicle transmission end of the engine 202. In an alternative example, the first electric machine 216 is a crankshaft integrated motor generator (CIMG), located at a vehicle transmission end of the engine 202. A CIMG may be capable of sustained electric-only driving unlike typical BISGs.

The first electric machine 216 is configured to selectively apply positive torque and negative torque to a crankshaft of the engine 202, for example to provide functions such as: boosting output torque of the engine 202; facilitating the deactivating of (shutting off) the engine 202 while the vehicle 10 is at a stop or coasting; activating (starting by cranking) the engine 202; generating power for ancillary loads; and/or regenerative braking in a regeneration mode. In a hybrid electric vehicle mode, the engine 202 and first electric machine 216 may both be operable to supply positive torque simultaneously to boost output torque. The first electric machine 216 may be incapable of sustained electric-only driving. In an alternative example, the first electric machine 216 is not controllable to provide positive torque other than to start the engine 202.

Fig 2 illustrates a second electric machine 212, also referred to as an electric traction motor, configured to enable at least an electric vehicle mode (EV mode) comprising electric-only driving. Another term for the second electric machine 212 is an electric drive unit. In some, but not necessarily all examples, a nominal maximum torque of the second electric machine 212 is greater than a nominal maximum torque of the first electric machine 216. The second electric machine 212 forms a torque source for the second set of vehicle wheels (RL, RR).

Even if the torque path 220 between the engine 202 and the first set of vehicle wheels (FL, FR) is disconnected, the vehicle 10 can be driven in EV mode because the second electric machine 212 is mechanically connected to at least one vehicle wheel while the engine 202 is disconnected.

The illustrated second electric machine 212 is configured to provide torque to the illustrated second set of vehicle wheels (RL, RR). The second set of vehicle wheels (RL, RR) comprises vehicle wheels not from the first set of vehicle wheels (FL, FR). The illustrated second set of vehicle wheels (RL, RR) comprises rear wheels, and the second electric machine 212 is operable to provide torque to the rear wheels RL, RR via a second, rear transverse axle or axles 224a, 224b. Therefore, the illustrated vehicle 10 is rear wheel driven in EV mode. In an alternative example, the second set of vehicle wheels comprises at least one vehicle wheel of the first set of vehicle wheels. In a further alternative implementation, the second electric machine 212 is replaced with two electric machines, one for each rear vehicle wheel RL, RR.

The control system 208 may be configured to disconnect the torque path 220 between the engine 202 and the first set of vehicle wheels (FL, FR) in EV mode, to reduce parasitic pumping energy losses. For example, the clutch 218 may be opened. In the example of Fig 2, this means that the first electric machine 216 will also be disconnected from the first set of vehicle wheels (FL, FR).

Another benefit of the second electric machine 212 is that the second electric machine 212 may also be configured to be operable in a hybrid electric vehicle mode, to enable multi-axle drive (e.g. all-wheel drive) operation despite the absence of a centre driveshaft.

In order to store electrical power for the electric machines, the system 20 comprises an electrical energy storage means such as a traction battery 200. The traction battery 200 provides a nominal voltage required by electrical power users such as the electric machines.

The traction battery 200 may be a high voltage battery. High voltage traction batteries provide nominal voltages in the hundreds of volts. The traction battery 200 may have a voltage and capacity to support electric only driving for sustained distances. The traction battery 200 may have a capacity of several kilowatt-hours, to maximise range. The capacity may be in the tens of kilowatt-hours, or even over a hundred kilowatt-hours.

Although the traction battery 200 is illustrated as one entity, the function of the traction battery 200 could be implemented using a plurality of small traction batteries in different locations on the vehicle 10.

The first electric machine 216 and second electric machine 212 may be configured to receive electrical energy from the same traction battery 200 as shown.

Finally, the illustrated system 20 comprises inverters. Two inverters 210, 214 are shown, one for each electric machine. In other examples, one inverter or more than two inverters could be provided.

In an alternative implementation, the vehicle 10 may be other than shown in Fig 2.

Fig 3A illustrates how the control system 208 may be implemented. The control system 208 of Fig 3A illustrates a controller 300. In other examples, the control system 208 may comprise a plurality of controllers on-board and/or off-board the vehicle 10.

The controller 300 of Fig 3A includes at least one processor 302; and at least one memory device 304 electrically coupled to the electronic processor 302 and having instructions 306 (e.g. a computer program) stored therein, the at least one memory device 304 and the instructions 306 configured to, with the at least one processor 302, cause any one or more of the methods described herein to be performed. The processor 302 may have an electrical input/output I/O or electrical input for receiving information and interacting with external components. For example, the electrical input/output may be configured to receive instructions from at least one human-machine interface 226.

Fig 3B illustrates a non-transitory computer-readable storage medium 308 comprising the instructions 306 (computer software).

The control system 208 is configured to manipulate output torque of one or more of the torque sources 202, 212, 216 described herein, to satisfy at least one received load request. A load request can be a torque request, a vehicle speed request, or a torque source speed request, for example. A driver load request is a load request based on a driver actuation such as accelerator pedal depression (APD) or operation of a cruise control speed setpoint interface. If the control system 208 supports a level of autonomous driving, a load request could be an autonomous driving load request.

A brake request is defined herein as a request for braking the vehicle, typically via friction braking and/or regenerative braking. In some, but not necessarily all examples, the brake request can be received by the control system 208, for example if the vehicle supports brake-by-wire. The control system 208 would then control the braking of the vehicle in dependence on the brake request. A driver brake request is a brake request based on a driver actuation such as brake pedal depression. If the control system 208 supports a level of autonomous driving, a brake request could be an autonomous brake request.

A system 20 such as the powertrain of Fig 2 can be operated in a plurality of powertrain operating modes. In one or more powertrain operating modes, the engine 202 is deactivated and the torque path 220 between the engine 202 and the first set of vehicle wheels (FL, FR) is disconnected. In another one or more modes, the engine 202 is re-activated and the torque path 220 may be re-connected. The powertrain operating mode may be selectable manually, semi-automatically, or automatically.

In EV mode, the control system 206 controls torque of the second electric machine 212 in dependence on a load request. The engine 202 is not controlled based on the load request. The engine's torque path 220 is disconnected. The engine 202 is generally in a deactivated state, although in some cases the engine 202 may be active for reasons other than generating electrical energy or drive torque, such as heating a cabin or an exhaust treatment catalyst.

In series HEV mode, the control system 206 controls torque of the second electric machine 212 in dependence on a load request. The engine 202 is in an activated state but is not controlled based on the load request. The torque path 220 is disconnected. The control system 208 can control the engine 202 and the first electric machine 216 to generate electrical energy for the traction battery 200/second electric machine 212.

In parallel HEV mode, the control system 206 can control torque of the second electric machine 212 and torque of the engine 202 in dependence on a load request. The torque of both torque sources 202, 212 may be controlled simultaneously based on the load request. The engine's torque path 220 is connected.

In an internal combustion engine mode (engine only mode, or 'ICE mode'), the control system 206 can control torque of the engine 202 in dependence on a load request. The engine's torque path 220 is connected. Drive torque is not requestable from the electric machine(s) 212, 216.

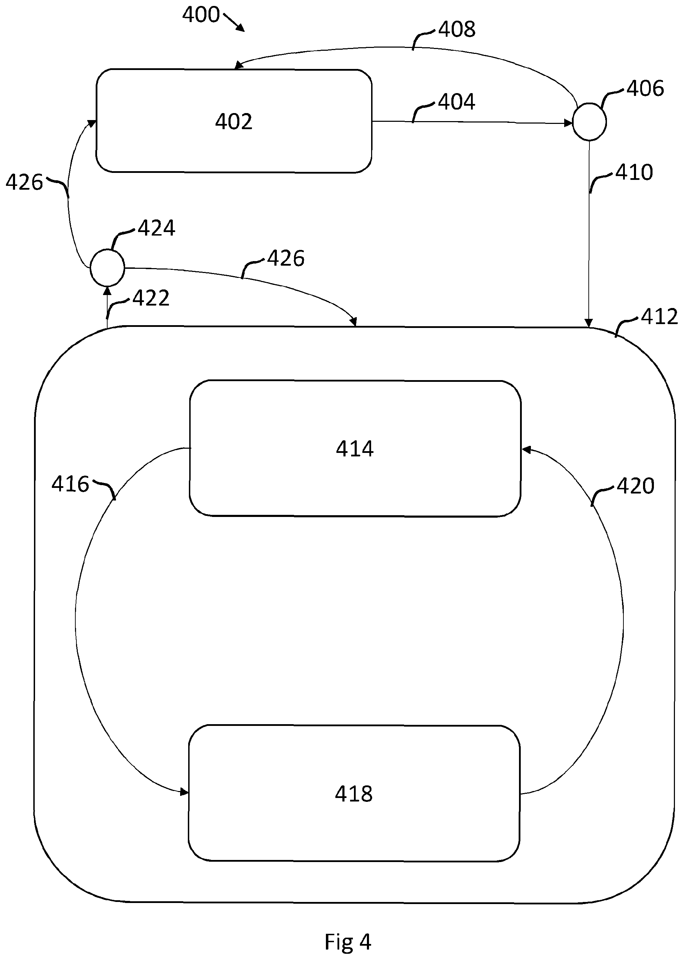

In accordance with an aspect of the invention, and as shown within the example state flow diagram of Fig 4, there is provided a method 400 of enabling deactivation of vehicle creep, the method 400 comprising: at block 402, enabling vehicle creep via an engine 202 and/or via an electric machine 212, so that wheel drive torque can reach a first value greater than zero without a driver load request and without a brake request; monitoring for a vehicle creep deactivation signal 404; and at block 412, in response to the vehicle creep deactivation signal, inhibiting vehicle creep, comprising causing disconnection (414) of the engine 202, at least in part, from the vehicle wheel FL, FR, and/or comprising not requesting the drive torque from the electric machine 212.

The vehicle creep deactivation signal can come from the driver. Therefore, the method 400 provides the driver with an option to select between creep or no creep.

The following discussion of Fig 4 makes reference to additional optional steps, and makes reference to the vehicle 10 of Fig 2. It would be appreciated that the vehicle 10 does not have to match that shown in Fig 2.

In Fig 4, block 402 is a vehicle creep enabled state.

When vehicle creep is enabled, the vehicle 10 can creep forwards without requiring a driver load request, when a forward or reverse gear is engaged, and when the wheel drive torque is sufficient to overcome resistance to motion (e.g. gradient, surface). The driver load request could be zero. Vehicle creep movement is possible without a brake request, meaning that the vehicle 10 will move if braking force is not enough to hold the vehicle stationary. In other words, when a driver's feet are off the accelerator and brake pedals, additional energy is nonetheless supplied to the vehicle 10 within a range of low vehicle speeds and at zero vehicle speed. Vehicle creep movement can also be possible despite a small brake request, if the resulting braking force is insufficient to hold the vehicle 10 stationary.

According to some, but not necessarily all aspects of the invention, the vehicle creep can be engine-driven. The engine 202 is in the activated state and is connected to the first set of vehicle wheels FL, FR via the connected torque path 220. Due to the absence of a load request, the engine 202 may be idling which produces positive nonzero torque.

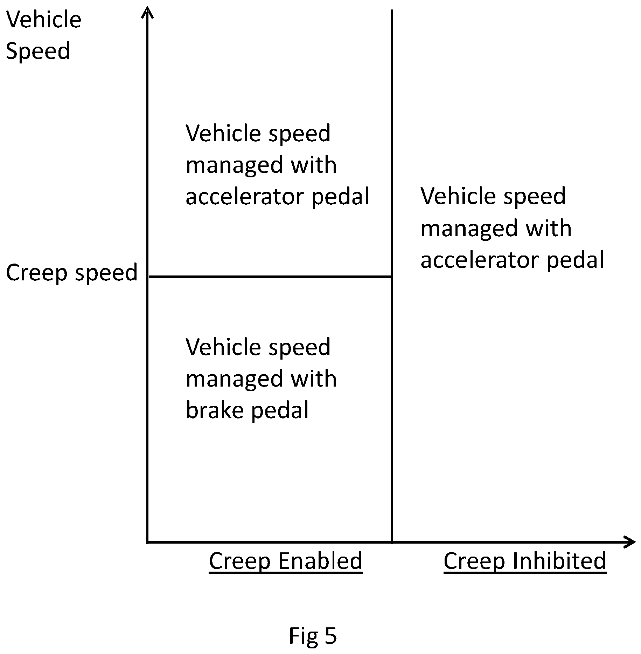

As shown in Fig 5, when vehicle creep is enabled, the vehicle 10 will tend towards a particular creep speed which depends on input energy and resistance to motion. More specifically, the creep speed depends on factors such as torque converter characteristics (construction / oil viscosity), engine idle speed, and resistance to motion (gradient & vehicle mass, terrain). For engine-driven creep, the input energy corresponds to the positive torque that is output by the idling engine 202. Therefore, there is a relationship between the engine's idle speed setpoint and the vehicle creep speed.

More specifically, the vehicle creep speed depends on the wheel drive torque. The wheel drive torque is a first value which corresponds to (idling engine output torque - losses) multiplied by a total engine-to-wheel gear reduction. The losses could include engine losses (pumping friction), torque converter load (torque taken to spin torque converter), and transmission losses (spin losses in the gearbox). The engine-to-wheel gear reduction may be nonlinear with respect to the slip rate across the torque converter 217 (based on the ratio between vehicle speed and engine speed). Further, the engine torque is not constant at idle. An idle controller controls engine output torque to maintain an idle speed setpoint. For a passenger vehicle, a vehicle 10 on firm and level ground would be expected to move steadily at a creep speed having a value greater than one kilometre per hour but less than about 12 kilometres per hour, depending on the vehicle and operating point. In order to hold the vehicle stationary, a brake request should request sufficient braking force to cancel the positive wheel drive torque of the vehicle creep. In other words, engine-driven creep torque does not cease when the vehicle 10 is held stationary by a brake request. If creep is electric machine-driven, the torque requested from the electric machine may be reduced as a brake request increases, to save energy.

As shown in Fig 5, when vehicle creep is enabled the driver can manage vehicle speeds below the creep speed by controlling brake requests. For example, the driver can depress a brake pedal to slow down, and release the brake pedal to increase vehicle speed towards the creep speed. The driver can manage vehicle speeds above the creep speed by controlling a driver load request. For example, the driver can depress an accelerator pedal to increase vehicle speed above the creep speed.

According to some, but not necessarily all aspects of the invention, the vehicle creep can be driven by the electric machine 212. Since an electric machine 212 does not have to idle like an engine 202, a synthetic vehicle creep function is required. The control system 208 may implement the synthetic vehicle creep function by determining a vehicle creep speed setpoint, and controlling torque of the electric machine 212 to match the vehicle creep speed setpoint. In an alternative implementation, the synthetic vehicle creep function may be a constant-torque function. The vehicle creep speed setpoint may be a value from the above range (between 1kph and 12kph). If a brake request is above a certain value, for example sufficient to hold the vehicle 10 stationary, the synthetic vehicle creep function may either maintain the torque of the electric machine 212, or cease requesting torque from the electric machine 212 to save energy and reduce heating of the electric machine 212.

Some vehicles like the one shown in Fig 2 are capable of both engine-driven creep and electric machine-driven creep. In this situation, the synthetic vehicle creep function may be calibrated to behave consistently with engine-driven creep behaviour. This eliminates sudden speed changes when a torque source changes. The synthetic vehicle creep function may comprise a transfer function. Firstly, the transfer function may simulate what the engine speed and/or torque would be if the engine 202 was active and connected. The slip rate across the torque converter 217 can then be simulated. The transfer function may simulate the engine-to-wheel gear reduction, which includes a model of the nonlinear torque multiplication of the torque converter 217 based on the simulated slip rate. The transfer function can then simulate what the wheel drive torque would be if the engine 202 was connected and active. The simulated wheel drive torque can readily be converted into control parameters such as a variable torque limit and/or a vehicle creep speed setpoint for the electric machine 212, which requests and/or limits the wheel torque from the electric machine 212 to a value that would be provided from the engine 202 and torque converter 217.

Some vehicles like the one shown in Fig 2 can enable creep in a plurality of powertrain operating modes as described earlier. The control system 208 may control which torque source provides vehicle creep, in dependence on a selected powertrain operating mode. For example:
- ICE mode may comprise engine-driven creep. The engine 202 is active and the torque path 220 is connected.
- The EV mode and series HEV mode may comprise electric machine-driven creep. The engine's torque path 220 is disconnected. The electric machine 212 implements the synthetic vehicle creep function. The engine 202 is either in a deactivated state (EV mode) or activated for generating electrical energy (series HEV mode).
- The parallel HEV mode may comprise engine-driven creep, and optionally electric machine-driven creep in combination. The combination results in a special case of multi-axle creep (e.g. all-wheel drive / fourwheel drive), for a vehicle 10 of the type shown in Fig 2. Both the first set of wheels FL, FR and the second set of wheels RL, RR are driving the vehicle 10. The control system 208 may be able to request additional drive torque from the electric machine 212 to assist vehicle creep. This is useful when extra torque is required for climbing obstacles or steep slopes, without the inconvenience and imprecision of having to depress an accelerator pedal. The additional torque may exceed that which is available from the engine alone at a given engine idle speed. Therefore, the assistive torque from the electric machine 212 reduces or eliminates the requirement to raise engine idle speed.

In the vehicle creep enabled state 402, the control system 208 is configured to monitor for an event 404 comprising a vehicle creep deactivation signal.

Monitoring for the vehicle creep deactivation signal 404 may comprise monitoring a human-machine interface 226. The human-machine interface 226 is operable by the driver. The human-machine interface 226 may be part of the vehicle 10, and/or could be an external device. The same human-machine interface 226 or a similar one may be used for re-activating vehicle creep.

In one example, monitoring the human-machine interface 226 comprises monitoring a digit-operated control such as a touchscreen user interface element, or a hardware control such as a button, switch or dial.

In another example, the human-machine interface 226 is a foot-operated control such as the accelerator pedal or brake pedal. The control system 208 may monitor the foot-operated control for the vehicle creep deactivation signal 404 by monitoring for a pattern of actuations of the foot-operated control, such as a plurality of depressions of the brake pedal. The pattern of actuations may comprise a predetermined temporal pattern. The pattern of actuations may require each actuation to be greater than a threshold magnitude.

When the vehicle creep deactivation signal 404 is received, optional decision block 406 comprises determining whether to accept the vehicle creep deactivation signal 404. The vehicle creep deactivation signal 404 may be rejected if the vehicle is moving, and/or if a fault condition is active such as a temperature fault of a torque source or other powertrain component. If the signal 404 is rejected, event 408 returns to state 402. If the signal 404 is accepted, event 410 triggers deactivation of vehicle creep, to enter a vehicle creep deactivated superstate 412 (explained later).

In some implementations, decision block 406 may require the vehicle 10 to be secured in a stationary condition. This ensures that the resulting drop in torque does not cause the vehicle 10 to move unexpectedly, for example rolling backwards downhill. The same requirement may apply for re-activating vehicle creep (block 424), to prevent a lurch.

In some examples, determining whether the vehicle 10 is secured in a stationary condition comprises monitoring a brake request. The control system 208 may monitor the brake request by monitoring a brake pedal. Determining that the vehicle 10 is secured in a stationary condition may comprise determining that the brake request is greater than zero, or another higher threshold. Additionally or alternatively, a handbrake sensor (emergency brake sensor) could be checked to verify that the handbrake is engaged.

Additionally or alternatively, determining whether the vehicle 10 is secured in a stationary condition comprises determining a selected gear of the transmission 204. Determining that the vehicle 10 is secured in a stationary condition may comprise determining that the selected gear is a Park gear. In some examples, a Neutral gear is sufficient to determine that the vehicle 10 is secured.

In some examples, determining whether the vehicle 10 is stationary may comprise determining a vehicle speed based on one or more speed sensors, such as wheel speed sensors. Wheel speed sensors can detect when a vehicle is approximately stationary.

In some implementations, deactivation of vehicle creep requires the vehicle 10 to be in a power mode in which the vehicle 10 is in a travelable state. That is, at least one torque source is capable of delivering torque to a vehicle wheel.

In some implementations, the control system 208 may be configured not to allow the driver to trigger the vehicle creep deactivation signal 404. If the required conditions (406) are not satisfied, such as the vehicle 10 not being secured in a stationary condition, the control system 208 may implement a hardware and/or software lock to prevent the user from operating the human-machine interface 226.

Some implementations may allow for automatic or semi-automatic deactivation of vehicle creep, for example during adaptive cruise control or autonomous driving. Some implementations enable indirect deactivation of vehicle creep, for example when changing another vehicle setting or mode to one that does not include vehicle creep.

The illustrated vehicle creep deactivated superstate 412 comprises an inhibit engine connection state 414, which may be active when vehicle speed is below a falling speed threshold and/or when a driver load request is below a falling load threshold. In the inhibit engine connection state 414, the engine's torque path 220 is at least partially disconnected. The control system 208 may set an inhibit flag not allowing the engine 202 to be connected by other engine on/off functions.

When vehicle creep is deactivated, the inhibit engine connection state 414 may be entered, comprising at least partially disconnecting the engine's torque path 220 if the engine 202 is currently connected. Deactivating vehicle creep comprises cancelling the synthetic vehicle creep function if it is currently active. The disconnection may comprise shifting the automatic transmission 204 into neutral and/or slipping a torque path connector 218 (e.g. clutch) of the automatic transmission 204.

If the engine's torque path 220 is already disconnected at the time of vehicle creep deactivation, the inhibit flag will prevent reconnection of the engine 202, at least at low vehicle speeds/loads defined later in relation to block 420.

The disconnected engine 202 could be deactivated for efficiency. However, the engine 202 could remain active if it is required to do so. For example, the engine 202 may be required to remain active to generate electrical energy, to provide cabin heating, to light off an exhaust treatment catalyst, or for other reasons.

As shown in Fig 5, the vehicle 10 with creep inhibited will no longer try to accelerate towards a creep speed, because the engine's torque path 220 is disconnected. Therefore, without a driver load request and without a brake request (i.e. with the driver's feet off the pedals), no additional energy is supplied to the vehicle 10, or at least insufficient energy to enable vehicle creep. This does not necessarily preclude the ability of a torque source to provide positive torque to the vehicle wheels for other reasons such as a hill-hold function, to prevent the vehicle 10 from rolling backwards.

When vehicle creep is deactivated and the vehicle speed is below the creep speed, the driver can provide a load request signalling an intent to accelerate the vehicle 10 or maintain a higher speed. Connecting the engine 202 at such low vehicle speeds may cause engine stall or a perceptible jerk. Therefore, at low speeds the control system 208 may be configured to control torque of the electric machine 212 based on the driver's load request. The engine 202 could be run to generate electrical energy for the electric machine 212, for example when the control system 206 determines that a state of charge of the traction battery 200 is low.

Alternatively, the control system 208 could partially reconnect the engine's torque path 220 in dependence on the load request. For example, the control system 208 may slip a torque path connector 218 in the transmission 204. The control system 208 may control the slip rate in dependence on the magnitude of the load request. In some examples, the control system 208 may control a combination of slip rate and engine torque in dependence on the load request.

If the vehicle 10 has a plurality of powertrain operating modes as described earlier, a nonzero driver load request at low/zero vehicle speed can be responded to as follows:
- In EV mode and series HEV mode, the electric machine 212 can be controlled in dependence on the load request. This enables the vehicle 10 to be accelerated while the engine's torque path 220 is not connected.
- In ICE mode, the engine 202 can be partially reconnected in dependence on the load request, e.g. by slipping the torque path connector 218, until the vehicle 10 is moving fast enough that the engine 202 can be fully reconnected. Alternatively, the electric machine 212 could be controlled in dependence on the load request, until the engine 202 can be reconnected. Alternatively, deactivation of vehicle creep may be prohibited in ICE mode.
- In parallel HEV mode, the electric machine 212 can be controlled and/or the engine 202 can be partially reconnected, in dependence on the load request.

If the electric machine 212 is unavailable for responding to the load request, the engine 202 could be partially reconnected (e.g. clutch slip), so that the driver can move the vehicle 10 forward by tapping the accelerator pedal. The electric machine 212 could be unavailable for reasons such as high/low battery temperature, very low state of charge, high electric machine temperature, etc.

As shown in Fig 5, with creep inhibited the vehicle's speed and acceleration can now be managed with a single driver control such as the accelerator pedal, at very low speeds as well as high speeds. This enables single-pedal driving, rather than having to switch to the brake pedal at low speeds. Single-pedal driving without creep may be preferred by some drivers.

In Fig 4, the disconnection of the engine's torque path 220 is not permanent. The engine 202 may still be required to provide immediate wheel drive torque at higher vehicle speeds and/or at high loads. For example, a parallel HEV mode or an ICE only powertrain operating mode may require use of the engine 202 at above-creep vehicle speeds. Further, the series HEV mode and/or EV mode may have a 'tip-in' function wherein the engine 202 provides a torque boost at high loads. Therefore, the illustrated vehicle creep deactivated superstate 412 further comprises an allow engine connection state 418 which ensures that the engine's torque path 220 is reconnected at higher speeds/loads. Vehicle creep is still disabled.

For example, in the allow engine connection state 418, the engine 202 can be reconnected to the first set of vehicle wheels FL, FR if required. The trigger event 416 for transitioning from state 414 to state 418 may comprise a driver load request exceeding a rising load threshold and/or vehicle speed rising above a rising vehicle speed threshold (block 414). In the allow engine connection state 418, the control system 208 may activate the engine 202 and connect the torque path 220 and/or may allow the engine 202 to be activated by other engine on/off functions, e.g. by removing the inhibit flag. When the engine 202 is active and connected, the control system 208 can then control the engine 202 in dependence on a load request.

The trigger event 420 for transitioning from the allow engine connection state 418 to the inhibit engine connection state 414 may comprise vehicle speed falling below a falling vehicle speed threshold and/or a driver load request falling below a falling load threshold.

The falling vehicle speed threshold may be a value from the range approximately 5kph to approximately 10kph, such as approximately 7kph. The falling vehicle speed threshold may be a vehicle speed that corresponds to an engine speed greater than or equal to an engine idle speed setpoint.

A slight hysteresis may be introduced between the falling vehicle speed threshold and the rising vehicle speed threshold, to prevent excessive switching during low-speed driving. The rising vehicle speed threshold may be a greater value, from the range greater than approximately 5kph to approximately 15kph, such as approximately 9kph.

The value of the falling load threshold and/or rising load threshold depends on implementation. The rising load threshold could correspond to a value of at least 40% or more of a maximum torque capability of the combined torque sources of the vehicle 10. If the vehicle 10 is driven by the electric machine 212 at low speeds, the rising load threshold could be a load approximately equal to or greater than a maximum torque capability of the electric machine 212, so that the engine 202 can increase the maximum torque availability.

A hysteresis may be introduced between the falling load threshold and the rising load threshold.

In summary, the above state machine keeps the engine's torque path 220 disconnected at low vehicle speeds, so that vehicle creep is inhibited. If the engine 202 is reconnected, the state machine can keep the engine 202 connected until the next time the vehicle speed falls.

In the vehicle creep deactivated superstate 412, the control system 208 may be configured to monitor for an event 422 comprising a vehicle creep activation signal, for transitioning back to the vehicle creep enabled state 402.

Optional decision block 424 comprises determining whether to accept the vehicle creep activation signal 422. The vehicle creep activation signal 422 may be rejected if the vehicle is moving, and/or not secured in a stationary condition, and/or if a fault condition is active. If the signal 422 is rejected, event 426 returns to state 412. If the signal 422 is accepted, event 426 triggers enablement of vehicle creep.

The process for enabling vehicle creep may be essentially the same as blocks 404, 406, 410, except the human-machine interface control and/or type of actuation assigned to creep activation may be different from that assigned to creep deactivation.

For purposes of this disclosure, it is to be understood that the controller(s) described herein can each comprise a control unit or computational device having one or more electronic processors. A vehicle and/or a system thereof may comprise a single control unit or electronic controller or alternatively different functions of the controller(s) may be embodied in, or hosted in, different control units or controllers. A set of instructions could be provided which, when executed, cause said controller(s) or control unit(s) to implement the control techniques described herein (including the described method(s)). The set of instructions may be embedded in one or more electronic processors, or alternatively, the set of instructions could be provided as software to be executed by one or more electronic processor(s). For example, a first controller may be implemented in software run on one or more electronic processors, and one or more other controllers may also be implemented in software run on one or more electronic processors, optionally the same one or more processors as the first controller. It will be appreciated, however, that other arrangements are also useful, and therefore, the present disclosure is not intended to be limited to any particular arrangement. In any event, the set of instructions described above may be embedded in a computer-readable storage medium (e.g., a non-transitory computer-readable storage medium) that may comprise any mechanism for storing information in a form readable by a machine or electronic processors/computational device, including, without limitation: a magnetic storage medium (e.g., floppy diskette); optical storage medium (e.g., CD-ROM); magneto optical storage medium; read only memory (ROM); random access memory (RAM); erasable programmable memory (e.g., EPROM and EEPROM); flash memory; or electrical or other types of medium for storing such information/instructions.

It will be appreciated that various changes and modifications can be made to the present invention without departing from the scope of the present invention as claimed.

The blocks illustrated in Fig 4 may represent steps in a method and/or sections of code in the computer program 306. The illustration of a particular order to the blocks does not necessarily imply that there is a required or preferred order for the blocks and the order and arrangement of the block may be varied. Furthermore, it may be possible for some steps to be omitted.

Although embodiments of the present invention have been described in the preceding paragraphs with reference to various examples, it should be appreciated that modifications to the examples given can be made without departing from the scope of the invention as claimed.

## Claims

1. A control system (208) for enabling deactivation of vehicle creep in a vehicle (10) with an engine (202), the control system (208) comprising one or more controllers (300), wherein the control system (208) is configured to:
enable vehicle creep (402) so that wheel drive torque can reach a first value greater than zero without a driver load request and without a brake request, wherein enabling vehicle creep comprises the engine being active while connected to a vehicle wheel;
monitor for a vehicle creep deactivation signal (404); and
in response to the vehicle creep deactivation signal, inhibit vehicle creep (412) so that wheel drive torque cannot reach the first value without a driver load request, and wherein inhibiting vehicle creep comprises causing disconnection (414) of the engine (202), at least in part, from the vehicle wheel, wherein the vehicle (10) comprises an electric machine (212) configured to remain connected to at least one vehicle wheel while the engine (10) is disconnected.

2. The control system (208) of claim 1, configured to control the electric machine (212) based on a driver load request, while the engine (10) is disconnected.

3. The control system (208) of claim 2, wherein the control system (208) is configured to control the engine (202) and a generator to generate electrical energy for the electric machine (212), while the engine is disconnected.

4. The control system (208) of any preceding claim, wherein the vehicle (10) has a plurality of powertrain operating modes including a parallel hybrid electric vehicle mode, wherein in the parallel hybrid electric vehicle mode:
enabling vehicle creep comprises the engine (202) being connected to the vehicle wheel to enable vehicle creep, and wherein the control system (208) is configured to request additional drive torque from the electric machine (212) to assist vehicle creep; and
inhibiting vehicle creep comprises disconnecting the engine (202), and not requesting drive torque from the electric machine (212) without a driver load request.

5. The control system (208) of any preceding claim, wherein the vehicle (10) has a plurality of powertrain operating modes including a series hybrid electric vehicle mode and/or an electric vehicle mode, wherein in the series hybrid electric vehicle mode and/or the electric vehicle mode:
enabling vehicle creep comprises the engine (202) not being connected to the vehicle wheel, and wherein the control system (208) is configured to request drive torque from the electric machine (212) without a driver load request and without a brake request, to enable vehicle creep; and
inhibiting vehicle creep comprises not requesting drive torque from the electric machine (212) without a driver load request, while the engine (202) remains disconnected.

6. The control system (208) of any preceding claim, wherein the vehicle (10) has a plurality of powertrain operating modes including an engine only mode, wherein in the engine only mode, drive torque is not requested from the electric machine (212) regardless of whether vehicle creep is enabled or inhibited.

7. The control system (208) of any preceding claim, configured to partially reconnect the engine (202) and slip the connection based on a driver load request, while the vehicle creep is inhibited.

8. The control system (208) of any preceding claim,
wherein when vehicle creep is inhibited, the control system (208) is configured to disconnect the engine (202) in dependence on a threshold associated with falling vehicle speed, and/or
wherein when vehicle creep is inhibited, the control system (208) is configured to reconnect the engine (202) in dependence on a threshold associated with rising vehicle speed.

9. The control system (208) of any preceding claim, wherein the control system (208) is configured to reconnect the engine (202) in dependence on a threshold associated with a rising load request.

10. The control system (208) of any preceding claim, wherein, prior to the disconnection, if the engine (202) is active or is required to be active, the disconnection is performed when a condition is satisfied.

11. The control system (208) of claim 10, wherein satisfaction of the condition is dependent on vehicle speed.

12. A vehicle (10) comprising the control system (208) of any preceding claim.

13. A method (400) of enabling deactivation of vehicle creep in a vehicle (10) with an engine (202) and an electric machine (212), the method comprising:
enabling vehicle creep (402) so that wheel drive torque can reach a first value greater than zero without a driver load request and without a brake request, wherein enabling vehicle creep comprises the engine (202) being active while connected to a vehicle wheel;
monitoring for a vehicle creep deactivation signal (404); and
in response to the vehicle creep deactivation signal, inhibiting vehicle creep (412) so that wheel drive torque cannot reach the first value without a driver load request, and wherein inhibiting vehicle creep comprises causing disconnection (414) of the engine (202), at least in part, from the vehicle wheel while permitting the electric machine (212) to remain connected to at least one vehicle wheel while the engine (202) is disconnected.

14. Computer software that, when executed on a computer, is configured to perform the method of claim 13.

## Patentansprüche

1. Steuersystem (208) zum Aktivieren einer Deaktivierung von Fahrzeugkriechen in einem Fahrzeug (10) mit einem Motor (202), wobei das Steuersystem (208) eine oder mehrere Steuerungen (300) umfasst, wobei das Steuersystem (208) konfiguriert ist zum:
Aktivieren von Fahrzeugkriechen (402), sodass das Radantriebsdrehmoment ohne eine Fahrerlastanforderung und ohne eine Bremsanforderung einen ersten Wert größer als Null erreichen kann, wobei das Aktivieren von Fahrzeugkriechen umfasst, dass der Motor aktiv ist, während er mit einem Fahrzeugrad verbunden ist;
Überwachen auf ein Fahrzeugkriechdeaktivierungssignal (404); und
als Reaktion auf das Fahrzeugkriechdeaktivierungssignal, Unterbinden von Fahrzeugkriechen (412), sodass das Radantriebsdrehmoment den ersten Wert nicht ohne eine Fahrerlastanforderung erreichen kann, und wobei das Unterbinden von Fahrzeugkriechen das zumindest teilweise Trennen (414) des Motors (202) vom Fahrzeugrad umfasst, wobei das Fahrzeug (10) eine elektrische Maschine (212) umfasst, die konfiguriert ist, um mit mindestens einem Fahrzeugrad verbunden zu bleiben, während der Motor (10) getrennt ist.

2. Steuersystem (208) nach Anspruch 1, das konfiguriert ist, um die elektrische Maschine (212) basierend auf einer Fahrerlastanforderung zu steuern, während der Motor (10) getrennt ist.

3. Steuersystem (208) nach Anspruch 2, wobei das Steuersystem (208) konfiguriert ist, um den Motor (202) und einen Generator zu steuern, um elektrische Energie für die elektrische Maschine (212) zu erzeugen, während der Motor getrennt ist.

4. Steuersystem (208) nach einem der vorstehenden Ansprüche, wobei das Fahrzeug (10) eine Vielzahl von Antriebsstrang-Betriebsmodi aufweist, die einen Parallelhybrid-Elektrofahrzeugmodus einschließt, wobei in dem Parallelhybrid-Elektrofahrzeugmodus:
Aktivieren von Fahrzeugkriechen umfasst, dass der Motor (202) mit dem Fahrzeugrad verbunden wird, um Fahrzeugkriechen zu aktivieren, und wobei das Steuersystem (208) konfiguriert ist, um zusätzliches Antriebsdrehmoment von der elektrischen Maschine (212) anzufordern, um Fahrzeugkriechen zu unterstützen; und
Unterbinden von Fahrzeugkriechen umfasst, dass der Motor (202) getrennt wird, und Nichtanfordern von Antriebsdrehmoment von der elektrischen Maschine (212) ohne Fahrerlastanforderung.

5. Steuersystem (208) nach einem der vorstehenden Ansprüche, wobei das Fahrzeug (10) eine Vielzahl von Antriebsstrang-Betriebsmodi aufweist, die einen seriellen Hybrid-Elektrofahrzeugmodus und/oder einen Elektrofahrzeugmodus einschließt, wobei in dem seriellen Hybrid-Elektrofahrzeugmodus und/oder in dem Elektrofahrzeugmodus:
Aktivieren von Fahrzeugkriechen umfasst, dass der Motor (202) nicht mit dem Fahrzeugrad verbunden ist, und wobei das Steuersystem (208) konfiguriert ist, um ohne eine Fahrerlastanforderung und ohne eine Bremsanforderung ein Antriebsdrehmoment von der elektrischen Maschine (212) anzufordern, um Fahrzeugkriechen zu aktivieren; und
Unterbinden von Fahrzeugkriechen umfasst, dass kein Antriebsdrehmoment von der elektrischen Maschine (212) ohne Fahrerlastanforderung angefordert wird, während der Motor (202) getrennt bleibt.

6. Steuersystem (208) nach einem der vorstehenden Ansprüche, wobei das Fahrzeug (10) eine Vielzahl von Antriebsstrang-Betriebsmodi aufweist, die einen Nur-Motor-Modus einschließt, wobei in dem Nur-Motor-Modus kein Antriebsdrehmoment von der elektrischen Maschine (212) angefordert wird, unabhängig davon, ob Fahrzeugkriechen aktiviert oder unterbunden ist.

7. Steuersystem (208) nach einem der vorstehenden Ansprüche, das konfiguriert ist, um den Motor (202) teilweise wieder zu verbinden und die Verbindung basierend auf einer Fahrerlastanforderung schleifen zu lassen, während das Fahrzeugkriechen unterbunden wird.

8. Steuersystem (208) nach einem der vorstehenden Ansprüche,
wobei das Steuersystem (208) bei Unterbinden von Fahrzeugkriechen konfiguriert ist, um den Motor (202) in Abhängigkeit von einem Schwellenwert, der mit der sinkenden Fahrzeuggeschwindigkeit verknüpft ist, zu trennen, und/oder
wobei das Steuersystem (208) bei Unterbinden von Fahrzeugkriechen konfiguriert ist, um den Motor (202) in Abhängigkeit von einem Schwellenwert, der mit der steigenden Fahrzeuggeschwindigkeit verknüpft ist, wieder zu verbinden.

9. Steuersystem (208) nach einem der vorstehenden Ansprüche, wobei das Steuersystem (208) konfiguriert ist, um den Motor (202) in Abhängigkeit von einem Schwellenwert, der mit einer steigenden Lastanforderung verknüpft ist, wieder zu verbinden.

10. Steuersystem (208) nach einem der vorstehenden Ansprüche, wobei vor der Trennung, wenn der Motor (202) aktiv ist oder aktiv sein muss, die Trennung durchgeführt wird, wenn eine Bedingung erfüllt ist.

11. Steuersystem (208) nach Anspruch 10, wobei die Erfüllung der Bedingung von der Fahrzeuggeschwindigkeit abhängt.

12. Fahrzeug (10), umfassend das Steuersystem (208) nach einem der vorstehenden Ansprüche.

13. Verfahren (400) zum Aktivieren der Deaktivierung von Fahrzeugkriechen in einem Fahrzeug (10) mit einem Motor (202) und einer elektrischen Maschine (212), wobei das Verfahren umfasst:
Aktivieren von Fahrzeugkriechen (402), sodass das Radantriebsdrehmoment ohne Fahrerlastanforderung und ohne Bremsanforderung einen ersten Wert größer als Null erreichen kann, wobei das Aktivieren von Fahrzeugkriechen umfasst, dass der Motor (202) aktiv ist, während er mit einem Fahrzeugrad verbunden ist;
Überwachen auf ein Fahrzeugkriechdeaktivierungssignal (404); und
als Reaktion auf das Fahrzeugkriechdeaktivierungssignal, Unterbinden von Fahrzeugkriechen (412), sodass das Radantriebsdrehmoment den ersten Wert nicht ohne eine Fahrerlastanforderung erreichen kann, und wobei das Unterbinden von Fahrzeugkriechen das zumindest teilweise Trennen (414) des Motors (202) vom Fahrzeugrad umfasst, während die Verbindung der elektrischen Maschine (212) mit mindestens einem Fahrzeugrad ermöglicht wird, während der Motor (202) getrennt ist.

14. Computersoftware, die, wenn sie durch einen Computer ausgeführt wird, konfiguriert ist, um ein Verfahren nach Anspruch 13 durchzuführen.

## Revendications

1. Système de commande (208) afin de permettre la désactivation de l'avance lente de véhicule dans un véhicule (10) avec un moteur (202), le système de commande (208) comprenant un ou plusieurs dispositifs de commande (300), dans lequel le système de commande (208) est configuré pour :
le fait de permettre l'avance lente de véhicule (402) afin que le couple d'entraînement de roue puisse atteindre une première valeur supérieure à zéro sans une demande de charge de conducteur et sans une demande de freinage, dans lequel le fait de permettre l'avance lente de véhicule comprend l'activation de moteur pendant qu'il est connecté à une roue de véhicule ;
surveiller un signal de désactivation d'avance lente de véhicule (404) ; et
en réponse au signal de désactivation d'avance lente de véhicule, inhiber l'avance lente de véhicule (412) de sorte que le couple d'entraînement de roue ne puisse pas atteindre la première valeur sans une demande de charge de conducteur, et dans lequel l'inhibition de l'avance lente de véhicule comprend le fait de provoquer une déconnexion (414) du moteur (202), au moins en partie, de la roue de véhicule, dans lequel le véhicule (10) comprend une machine électrique (212) configurée pour rester connectée à au moins une roue de véhicule pendant que le moteur (10) est déconnecté.

2. Système de commande (208) selon la revendication 1, configuré pour commander la machine électrique (212) sur la base d'une demande de charge de conducteur, alors que le moteur (10) est déconnecté.

3. Système de commande (208) selon la revendication 2, dans lequel le système de commande (208) est configuré pour commander le moteur (202) et un générateur afin de générer de l'énergie électrique pour la machine électrique (212), alors que le moteur est déconnecté.

4. Système de commande (208) selon l'une quelconque revendication précédente, dans lequel le véhicule (10) a une pluralité de modes de fonctionnement de groupe motopropulseur, y compris un mode de véhicule électrique hybride parallèle, dans lequel dans le mode de véhicule électrique hybride parallèle :
le fait de permettre l'avance lente de véhicule comprend la connexion du moteur (202) à la roue de véhicule pour le fait de permettre l'avance lente de véhicule, et dans lequel le système de commande (208) est configuré pour demander un couple d'entraînement supplémentaire à la machine électrique (212) afin de faciliter l'avance lente de véhicule ; et
l'inhibition de l'avance lente de véhicule comprend la déconnexion du moteur (202) et ne pas demander de couple d'entraînement à la machine électrique (212) sans une demande de charge de conducteur.

5. Système de commande (208) selon l'une quelconque revendication précédente, dans lequel le véhicule (10) a une pluralité de modes de fonctionnement de groupe motopropulseur, y compris un mode de véhicule électrique hybride en série et/ou un mode de véhicule électrique, dans lequel dans le mode de véhicule électrique hybride en série et/ou le mode de véhicule électrique :
le fait de permettre l'avance lente de véhicule comprend le moteur (202) qui n'est pas connecté à la roue de véhicule, et dans lequel le système de commande (208) est configuré pour demander un couple d'entraînement à la machine électrique (212) sans une demande de charge de conducteur et sans une demande de freinage, afin de permettre l'avance lente de véhicule ; et
l'inhibition de l'avance lente de véhicule comprend le fait de ne pas demander de couple d'entraînement à la machine électrique (212) sans une demande de charge de conducteur, alors que le moteur (202) reste déconnecté.

6. Système de commande (208) selon l'une quelconque revendication précédente, dans lequel le véhicule (10) a une pluralité de modes de fonctionnement de groupe motopropulseur, y compris un mode moteur seul, dans lequel, en mode moteur seul, le couple d'entraînement n'est pas demandé à la machine électrique (212), que la marche lente du véhicule soit activée ou inhibée.

7. Système de commande (208) selon l'une quelconque revendication précédente, configuré pour reconnecter partiellement le moteur (202) et faire glisser la connexion sur la base d'une demande de charge de conducteur, alors que le mouvement de repli du véhicule est inhibé.

8. Système de commande (208) selon l'une quelconque revendication précédente,
dans lequel, lorsque l'avance lente de véhicule est inhibé, le système de commande (208) est configuré pour déconnecter le moteur (202) en fonction d'un seuil associé à la vitesse d'avance lente défaillante, et/ou
dans lequel, lorsque la progression de véhicule est inhibée, le système de commande (208) est configuré pour reconnecter le moteur (202) en fonction d'un seuil associé à l'augmentation de la vitesse de véhicule.

9. Système de commande (208) selon l'une quelconque revendication précédente, dans lequel le système de commande (208) est configuré pour reconnecter le moteur (202) en fonction d'un seuil associé à une demande de charge croissante.

10. Système de commande (208) selon l'une quelconque revendication précédente, dans lequel, avant la déconnexion, si le moteur (202) est actif ou doit être actif, la déconnexion est effectuée lorsqu'une condition est remplie.

11. Système de commande (208) selon la revendication 10, dans lequel la satisfaction de la condition dépend de la vitesse de véhicule.

12. Véhicule (10) comprenant le système de commande (208) selon l'une quelconque revendication précédente.

13. Procédé (400) permettant la désactivation de l'avance lente de véhicule dans un véhicule (10) avec un moteur (202) et une machine électrique (212), le procédé comprenant :
le fait de permettre l'avance lente de véhicule (402) de sorte que le couple d'entraînement de roue puisse atteindre une première valeur supérieure à zéro sans une demande de charge de conducteur et sans une demande de freinage, dans lequel le fait de permettre l'avance lente de véhicule comprend l'activation du moteur (202) lorsqu'il est connecté à une roue de véhicule ;
la surveillance d'un signal de désactivation d'avance lente de véhicule (404) ; et
en réponse au signal de désactivation de l'avance lente de véhicule, l'inhibition de l'avance lente de véhicule (412) de sorte que le couple d'entraînement de roue ne puisse pas atteindre la première valeur sans une demande de charge de conducteur, et dans lequel l'inhibition de l'avance lente de véhicule comprend le fait de provoquer la déconnexion (414) du moteur (202), au moins en partie, de la roue de véhicule tout en permettant à la machine électrique (212) de rester connectée à au moins une roue du véhicule pendant que le moteur (202) est déconnecté.

14. Logiciel informatique qui, lorsqu'il est exécuté sur un ordinateur, est configuré pour effectuer le procédé selon la revendication 13.
